# EUROPÄISCHE PATENTSCHRIFT

(11) **EP 2 264 421 B1**
(45) Veröffentlichungstag und Bekanntmachung des Hinweises auf die Patenterteilung: **02.11.2016**
(21) Anmeldenummer: 10164127.2
(22) Anmeldetag: 27.05.2010
(51) Int. Cl.: G01M 15/02, G01M 15/04

(54) **Prüfstandsanordnung**
Test facility assembly
Agencement de banc d'essai

(30) Priorität: 16.06.2009 AT 3702009
(43) Veröffentlichungstag der Anmeldung: 22.12.2010
(73) Patentinhaber: AVL List GmbH, 8020 Graz (AT)
(72) Erfinder: Dank, Matthias, 8045, Graz (AT); Kokal, Helmut, 8503, St. Josef (AT); Mayrhofer, Josef, 8010, Graz (AT); Jones, Stephen, 8010, Graz (AT); Denger, Dirk, 8020, Graz (AT); Schmidt, Martin, 63225, Langen (DE)
(74) Vertreter: Patentanwälte Pinter & Weiss OG

(56) Entgegenhaltungen:
- EP-A2- 1 037 030
- WO-A1-2007/133154
- WO-A1-2011/022746
- US-B1- 6 360 591
- CAVINA N.; SERRA G.: "Analysis of a Dual Mass Flywheel System for Engine Control Applications", SAE 2004-01-3016, 25. Oktober 2004 (2004-10-25), XP002740705,

## Beschreibung

Die Erfindung betrifft eine Prüfstandsanordnung mit einem Prüfling, welcher mit zumindest einer Elektromaschine für Antrieb und/oder Belastung des Prüflings verbunden ist, sowie mit einer Regelungsanordnung für die oder jede Elektromaschine für Antrieb und/oder Belastung des Prüflings, wobei in der Regelungsanordnung zumindest ein Modell für eine an den Prüfling anschließbare Komponente implementiert ist, aus welchem Modell zumindest ein Teil der Regelanforderung an die oder jede Elektromaschine ermittelt wird.

Steigende Kraftstoffpreise und gesetzliche Vorgaben in Bezug auf Emission und CO2, in Kombination mit hohen Kundenerwartungen bzgl. Komfort, führt zu einem stetig wachsenden Bedarf in Hinblick auf kostenoptimierte Fahrzeuge mit hoch innovativen Antriebsträngen. Aus diesem Grund sind die Fahrzeughersteller mit der Herausforderung konfrontiert, hoch komplexe Antriebstranglösungen schnell und zielgerichtet zu entwickeln. Um diesen Herausforderungen gerecht zu werden, sind diverse Strategien entwickelt worden wobei sich das "Front Loading" des Entwicklungsprozesses, auf Basis des "Road-to-Lab-Math" Strategieansatzes, als Kernstrategie herauskristallisiert hat. Hier sollen Entwicklungsaufgaben, welche früher nur in teuren Prototypenumgebungen bearbeitet werden konnten, in frühe Prozessphasen transferiert werden, wie beispielsweise in Gschweitl K., Ellinger R., Loibner E.: "Werkzeuge und Methoden im Hybrid Entwicklungsprozess", 19. "Motor und Umwelt"-Konferenz, Graz 2007, in Schyr C., Gschweitl K.: "Methodische Validierung von hybriden Antriebsträngen". 2. Internationales Symposium für Entwicklungsmethodik, Darmstadt, 2007 oder in Beidl C., Rainer G., Schoeggl P., Martini E., Dener D.: "Enabling Future Powertrain Solutions by Innovative Simulation &Testing Toolchains". 32nd FISITA World Automaotive Congress, Munich, 2008, beschrieben ist. Die Prototypenumgebungen sollen durch Simulationsumgebungen ersetzt werden. Diese Strategie setzt aber voraus, dass dem Entwickler durchgängige Entwicklungsumgebungen zur Verfügung stehen, in denen er das Gesamtsystemverhalten Fahrzeug aber auch dessen Interaktion mit der Umgebung berücksichtigen kann.

Beispielsweise zeigt die EP 1 037 030 A2 dazu die Möglichkeit ein die schlupfabhängige Reibung von Reifen, mittels eines Reifenmodells zu berücksichtigen. In Abhängigkeit davon, können elektrische Belastungsmaschinen auf einem entsprechenden Prüfstand geregelt werden. Zwar wird somit die Modellbildung von realen Bauteilen eines Fahrzeuges in Betracht gezogen, mögliche Probleme im Zusammenhang mit einem Mehrmassenschwungrad finden jedoch keinerlei Beachtung.

In Ähnlicher Weise zeigt die WO 2007/133154 A1 Einen Aufbau der es erlaubt auf einem Prüfstand unterschiedliche Reibungsverhältnisse an den Rädern eines Prüffahrzeuges zu berücksichtigen. Wiederum wird den Auswirkungen eines Mehrmassenschwungrades keine Beachtung geschenkt.

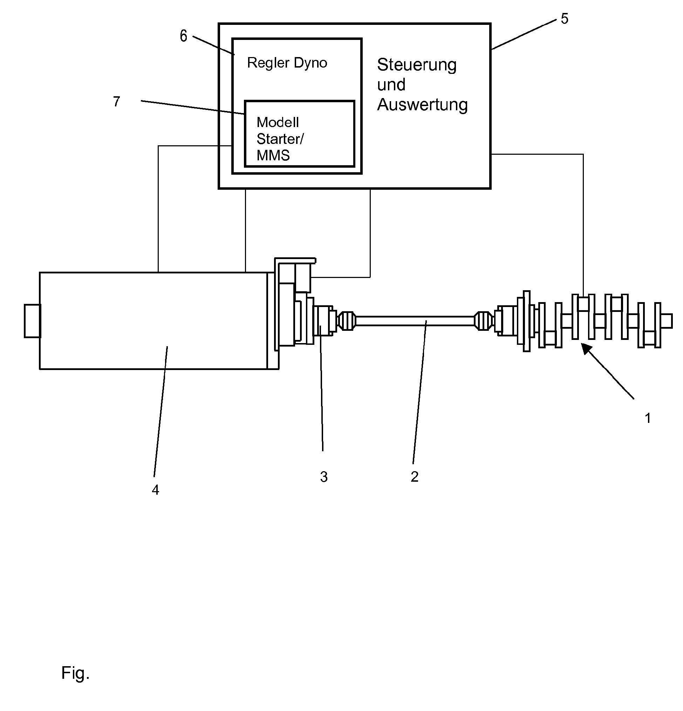

In vielen Entwicklungen ist ein wesentlicher Punkt die Abbildung des Verhaltens eines Mehrmassenschwungrades, meist eines Zweimassenschwungrades (ZMS), am Prüfstand, insbesondere an einem Motorenprüfstand. Auch im Zuge der Entwicklung von Hybridantriebssystemen wird das Mehrmassenschwungrad, insbesondere das Zweimassenschwungrad, zum Kernelement für alle Antriebstränge, da es zusammen mit der geeigneten Funktionalität eine gute Entkopplung von Verbrennungsmotor und Triebstrang ermöglicht. Aktuell ist das wirkliche Verhalten eines Mehrmassenschwungrades nur mit realen Prototypen am Prüfstand darstellbar. Damit war man auf die Verfügbarkeit von Zweimassenschwungrädern angewiesen. Beispiele dazu finden sich etwa in Walter A., Kiencke U., Jones S., Winkler T.: "Das Mehrmassenschwungrad als virtueller Sensor". MTZ 06/2007 Jahrgang 68, in Cavina N., Serra G.: "Analysis of a Dual Mass Flywheel System for Engine Control Applications". SAE 2004-01-3016, in A. Walter, U. Kiencke, S. Jones and T. Winkler, "Anti-jerk & idle speed control with integrated sub-harmonic vibration compensation for vehicles with dual mass flywheels", SAE, 2008, oder in A. Walter, M. Murt, U. Kiencke, S. Jones and T. Winkler, "Compensation of sub-harmonic vibrations during engine idle by variable fuel injection control", accepted for 17th IFAC World Congress, Seoul, South Korea, 2008.

Bei künftigen, elektrifizierten Antriebssträngen steigen jedoch die Anforderungen an derartige Module zur Entkopplung. Einerseits erhöhen sich die Momentenschwankungen, andererseits verringert sich die Anregungsfrequenz bei aktiviertem Verbrennungsmotor. Das Hybridsystem ermöglicht und erfordert des Weiteren eine schnelle Aktivierung und Abschaltung des Verbrennungsmotors sowohl im Stillstand, als auch im Fahrbetrieb. Dabei sollen natürlich keine für den Fahrer merkbaren Rückwirkung auf Antriebsstrang und Fahrzeug auftreten, es sollen kürzestmögliche Startzeiten erreicht werden, insbesondere, wenn der Start durch eine Fahreranforderung ausgelöst wird, auch bei einer deutlich erhöhten Anzahl von Startvorgängen und einem geänderten Aufwärmverhalten von Struktur und Abgassystem soll die Einhaltung aller Emissionsvorschriften gewährleistet sein, und es wird die Bewältigung von "Change of Mind" Szenarien gefordert, z.B. ein Wiederstart des Verbrennungsmotors während eines Abstellvorganges. Bei aktuellen Lösungen mit Zweimassenschwungrädern kann dieser Wiederstart zu einer Zerstörung führen.

Es war daher die Aufgabe der vorliegenden Erfindung, eine Prüfstandsanordnung anzugeben, insbesondere einen Prüfstand für eine Verbrennungskraftmaschine und/oder einen Fahrzeug-Antriebsstrang, der unter Vermeidung der oben deutlich gewordenen Nachteile die Verbindung der Antriebstrang- und Fahrzeugsimulation mit dem realen fahrzeugspezifischen Verbrennungs- und Instationärverhaltens des Motors herstellen kann.

Zur Lösung dieser Aufgabe ist die eingangs beschriebene Prüfstandsanordnung erfindungsgemäß dadurch gekennzeichnet,
dass in der Regelungsanordnung zumindest ein Modell für ein Mehrmassenschwungrad im- plementiert ist, welches Modell zumindest zwei Massen von Primär- und Sekundärseite des Mehrmassenschwungrades und ein Ersatzmodell für zumindest eine Bogenfeder beinhaltet, wobei in der Regelungsanordnung ein Algorithmus implementiert ist, der das Modell für ein Mehrmassenschwungrad durch ein integratives Zeitschrittverfahren auswertet. Durch diese Merkmale ist es nun möglich, das Verhalten des Mehrmassenschwungrades am Prüfstand in Echtzeit zu simulieren. Ein großer Vorteil besteht weiters darin, dass man nun in der Lage ist, schnell und einfach unterschiedliches Verhalten eines Mehrmassenschwungrades zu berücksichtigen, ohne auf die Verfügbarkeit von Prototypen angewiesen zu sein.

Vorteilhafterweise ist vorgesehen, dass der Algorithmus das Modell für ein Mehrmassenschwungrad durch ein integratives Zeitschrittverfahren mit fester Schrittweite auswertet.

Gemäß einer vorteilhaften Ausführungsform der Erfindung ist vorgesehen, dass in der Regelungsanordnung ein Algorithmus implementiert ist, welcher in jedem Berechnungsschritt die Federkraft und -reibung einzelner Federelemente und der gesamten Bogenfeder auswertet, wobei zusätzlich die resultierenden Kräfte und Momente aus der Massenträgheit der einzelnen Federelemente ausgewertet und als resultierende Summenkraft bzw. resultierendes Summenmoment auf die Primär- und Sekundärseite ermittelt werden.

Vorteilhafterweise kann das Modell für das Mehrmassenschwungrad eine parametrische Darstellung der radialen Steifigkeit der Bogenfeder beinhalten.

Eine weitere Variante der Erfindung sieht vor, dass das Modell für das Mehrmassenschwungrad eine parametrische Darstellung des Kontaktreibungsverhaltens beinhaltet. Ein Beispiel für eine parametrische Darstellung von Kontaktreibungskräften ist über Normalkraft und Reibwert (F_reib=F_normal*mu_reib); Nichtparametrisch könnte man ein ähnliches Problem etwa über den hertz'schen Kontakt lösen.

Gemäß einer wieder anderen erfindungsgemäßen Ausführungsform kann vorgesehen sein, dass das Modell für das Mehrmassenschwungrad eine parametrische Darstellung des variablen Freilaufs beinhaltet.

Auch ist es vorteilhaft, wenn gemäß einer anderen Variante der Erfindung das Modell für das Mehrmassenschwungrad eine Zustandsumschaltung zwischen Haften und Gleiten beinhaltet. Diese Zustandsumschaltung zwischen bspw. Haften und Gleiten erfolgt vorzugsweise über den Verlust bzw. den Gewinn eines Freiheitsgrades im System.

Um die Simulation noch weiter zu Verbessern kann auch vorgesehen sein, dass das Modell für das Mehrmassenschwungrad ein Modell für die Kontaktmechanik an den Endanschlägen der Bogenfeder an der Primär- und Sekundärmasse beinhaltet. Durch das integrative Zeitschrittverfahren und die - durch die Echtzeitapplikation bedingte - feste Zeitschrittweite des Gleichungslösers, ergibt sich eine maximal erlaubte Steifigkeit der Bogenfeder. Die "normale" Steifigkeit der Bogenfeder (ca 3-20 Nm/deg) liegt auch deutlich unter dieser Grenze. Geht die Bogenfeder bei maximaler Deformation auf Block, so erreicht die Steifigkeit deutlich höhere Werte (>1500 Nm/deg). Diese Steifigkeit am Endanschlag kann mit den geringen Massen der Primär- bzw. Sekundärseite in Echtzeit nicht mehr simulatorisch dargestellt werden. Sie wird daher für die Betrachtungsschrittweite als unendlich steif angenommen, so dass sich das beschriebene System nicht länger ein krafterregtes, beschleunigtes System ist. Auch gilt im Falle des Endanschlages der Impulssatz, d.h. es findet ein Energieausgleich zwischen dem schnelleren und dem langsameren System im Endanschlag statt. Daher kann der Effekt des Stoßes optimal genau nachgebildet werden.

Gemäß einer anderen alternativen Ausführung der Erfindung ist vorgesehen, dass in der Regelungsanordnung zumindest ein Modell für eine Startvorrichtung des Prüflings implementiert ist. Damit lassen sich verschiedenste Startercharakteristiken ohne komplizierte Umbauarbeiten und ohne Gefahr der Beschädigung von Komponenten der Prüfstandsanordnung oder der zu prüfenden Komponenten testen.

In der nachfolgenden Beschreibung soll die Erfindung anhand eines Ausführungsbeispieles und unter Bezugnahme auf die beigefügte Zeichnungsfigur näher erläutert werden.

Die Zeichnungsfigur zeigt in schematischer Darstellung eine Prüfstandsanordnung, beispielsweise einen Prüfstand für Verbrennungskraftmaschinen wie etwa Otto- oder Dieselmotoren als Prüfling 1, die durch deren Kurbelwelle symbolisiert ist. Dieser Prüfling 1 ist über eine Welle 2, die einen Drehmomentmessflansch 3 beinhalten kann, mit einer Elektromaschine 4 für Antrieb und/oder Belastung des Prüflings 1 verbunden. Die Erfindung ist auch auf Prüfstandsanordnungen mit mehreren Elektromaschinen 4 anwendbar, beispielsweise auf Prüfstände für einen Fahrzeug-Antriebsstrang. Die Steuer- und Auswerte-Einheit 5, welche auch Teile eines noch übergeordneten Prüfstandsautomatisierungssystems sein kann, umfasst auch zumindest eine Regelungsanordnung 6 für die oder jede Elektromaschine 4.

Während der Prüfling 1 real aufgebaut ist, können daran anschließbare Komponenten, beispielsweise ein Antriebsstrang eines Fahrzeuges, durch Simulation ersetzt werden, wofür zumindest ein Modell 7 für derartige, an den Prüfling 1 anschließbare Komponenten in der Regelungsanordnung 6 implementiert ist, aus welchem Modell 7 dann die Regelanforderung an die Elektromaschine 4 ermittelt wird. Oftmals regelt die Elektromaschine 4 eine Drehzahl oder ein Drehmoment stationär oder transient auch ohne weitere simulierte Komponenten ein, d.h. es ist keine Fahrzeugsimulation für den Prüfling 1 aktiv.

Gemäß der vorliegenden Erfindung ist nun in der Regelungsanordnung 6 zumindest ein Modell 7 für eine weitere, an den Prüfling 1 anschließbare Komponente implementiert, die bislang ebenfalls real als Bestandteil des Prüflings 1 vorhanden war. Beispielsweise kann dies ein Mehrmassenschwungrad oder auch eine Startvorrichtung für den Prüfling 1 sein. Erfindungsgemäß wird nun diese Komponente durch die virtuelle Realität der Simulation ersetzt.

Das Modell 7 beinhaltet für ein Mehrmassenschwungrad als Parameter zumindest die zwei Massen von Primär- und Sekundärseite des zu simulierenden Mehrmassenschwungrades und Ersatzmodell für die oder jede Bogenfeder. In vielen Fällen kann dabei ein massenloses Ersatzmodell von Vorteil sein. Nach einem in der Regelungsanordnung 6 implementierten Algorithmus, der das Modell 7 durch ein integratives Zeitschrittverfahren mit vorzugsweise fester Schrittweite auswertet, werden nun die Rückwirkungen ermittelt, die das modellierte Mehrmassenschwungrad auf den Prüfling 1 hat und werden diese Rückwirkungen in Steueranforderungen für die Elektromaschine 4 umgesetzt. Durch diesen Algorithmus wird in jedem Berechnungsschritt die Federkraft und -reibung der einzelnen Federelemente und der gesamten Bogenfeder ausgewertet, wobei zusätzlich die resultierenden Kräfte und Momente aus der Massenträgheit der einzelnen Federelemente ausgewertet und als resultierende Summenkraft bzw. resultierendes Summenmoment auf die Primär- und Sekundärseite ermittelt werden.

Ohne die Gefahr der Zerstörung von wertvollen oder nur schwer zugänglichen Prototypen kann damit die Auswirkungen von Mehrmassenschwungrädern auf den Prüfling 1 systematisch und hocheffizient untersucht werden, welche insbesondere durch einen Anstieg der Drehungleichförmigkeit auf der Motorseite und geringere Drehungleichförmigkeit zum Antriebstrang gegenüber der Variante mit festem Schwungrad gekennzeichnet sind.

Auch gestattet die erfindungsgemäße Echtzeit-Simulation des Mehrmassenschwungrades die zeit- und materialsparende Untersuchung von Fragen zur Auswirkung des Mehrmassenschwungradverhaltens auf den Prüfling Verbrennungsmotor bei Starten und Stoppen und nach der optimalen Regelstrategie für die Start/Stopp Funktionalitäten, ohne Versuche mit einer Vielzahl von realen Komponenten durchführen zu müssen. Dabei sind keine teuren Versuchsfahrzeuge notwendig, ist die Darstellung von Hardware-Änderungen oder Varianten in sehr kurzer Zeit möglich, können andere Bauteile schneller getauscht werden als in realen Fahrzeugen, sind die Tests sehr gut untereinander vergleichbar, da Entwicklungsumgebung immer konstant bleibt, und kann je nach Bedarf umfassendes Messequipment angewendet werden.

Besondere Bedeutung haben die genannten Vorteile insbesondere in der Entwicklung von Verbrennungsmotoren für künftige elektrifizierte Antriebsstränge bzw. die Gesamtsystementwicklung, d.h. sowohl die Auslegung des Mehrmassenschwungrades, als auch die Spezifikation aller zugehörigen Funktionen in Interaktion von ECU und der Hybridsteuerung, um ein optimales Zielsystem zu erzielen. Weiters sind auch Nebenaggregate- und Kettentriebentwicklungen, die Evaluierung und Validierung von komplexen Hybridsystemen inkl. deren Auswirkungen auf den Verbrennungsmotor durch Start/Stop, einige weitere relevante Themen.

Durch verschiedene Modelle 7 von Startvorrichtungen können beispielsweise bei der Variantenkalibration unterschiedlichste Startercharakteristiken, z.B. konventionelle Starter, Riementriebstarter, Schwungmassenstarter, Start über DKG, etc., abgebildet werden, während bei üblichen Prüfständen immer nur ein als Prototyp verbautes Startersystem überprüft werden konnte. Auch ist das Zusammenwirken von Startersystem und Mehrmassenschwungrad einfach und gefahrlos möglich, wenn das Modell 7 Teilmodelle für sowohl die Startvorrichtung als auch das Mehrmassenschwungrad enthält und die Regelanforderung an die Elektromaschine 4 beide Teilmodelle berücksichtigt.

## Patentansprüche

1. Prüfstandsanordnung mit einem Prüfling (1), welcher mit zumindest einer Elektromaschine (4) für Antrieb und/oder Belastung des Prüflings (1) verbunden ist, sowie mit einer Regelungsanordnung (6) für die oder jede Elektromaschine (4) für Antrieb und/oder Belastung des Prüflings (1), wobei in der Regelungsanordnung (6) zumindest ein Modell (7) für eine an den Prüfling (1) anschließbare Komponente implementiert ist, aus welchem Modell (7) zumindest ein Teil der Regelanforderung an die oder jede Elektromaschine (4) ermittelt wird, **dadurch gekennzeichnet, dass** in der Regelungsanordnung (6) zumindest ein Modell (7) für ein Mehrmassenschwungrad implementiert ist, welches Modell (7) zumindest zwei Massen von Primär- und Sekundärseite des Mehrmassenschwungrades und ein Ersatzmodell für zumindest eine Bogenfeder beinhaltet, wobei in der Regelungsanordnung (6) ein Algorithmus implementiert ist, der das Modell für ein Mehrmassenschwungrad durch ein integratives Zeitschrittverfahren auswertet.

2. Prüfstandsanordnung nach Anspruch 1, **dadurch gekennzeichnet, dass** der Algorithmus das Modell für ein Mehrmassenschwungrad durch ein integratives Zeitschrittverfahren mit fester Schrittweite auswertet.

3. Prüfstandsanordnung nach Anspruch 1 oder 2, **dadurch gekennzeichnet, dass** in der Regelungsanordnung (6) ein Algorithmus implementiert ist, welcher in jedem Berechnungsschritt die Federkraft und -reibung einzelner Federelemente und der gesamten Bogenfeder auswertet, wobei zusätzlich die resultierenden Kräfte und Momente aus der Massenträgheit der einzelnen Federelemente ausgewertet und als resultierende Summenkraft bzw. resultierendes Summenmoment auf die Primär- und Sekundärseite ermittelt werden.

4. Prüfstandsanordnung nach Anspruch 2 oder 3, **dadurch gekennzeichnet, dass** das Modell (7) für das Mehrmassenschwungrad eine parametrische Darstellung der radialen Steifigkeit der Bogenfeder beinhaltet.

5. Prüfstandsanordnung nach einem der Ansprüche 1 bis 4, **dadurch gekennzeichnet, dass** das Modell (7) für das Mehrmassenschwungrad eine parametrische Darstellung des Kontaktreibungsverhaltens beinhaltet.

6. Prüfstandsanordnung nach einem der Ansprüche 1 bis 5, **dadurch gekennzeichnet, dass** das Modell (7) für das Mehrmassenschwungrad eine parametrische Darstellung eines variablen Freilaufs beinhaltet.

7. Prüfstandsanordnung nach einem der Ansprüche 1 bis 6, **dadurch gekennzeichnet, dass** das Modell (7) für das Mehrmassenschwungrad eine Zustandsumschaltung zwischen Haften und Gleiten beinhaltet.

8. Prüfstandsanordnung nach einem der Ansprüche 1 bis 7, **dadurch gekennzeichnet, dass** das Modell (7) für das Mehrmassenschwungrad ein Modell für eine Kontaktmechanik an Endanschlägen der Bogenfeder an der Primär- und Sekundärmasse beinhaltet.

9. Prüfstandsanordnung nach einem der Ansprüche 1 bis 8, **dadurch gekennzeichnet, dass** in der Regelungsanordnung (6) zumindest ein Modell (7) für eine Startvorrichtung des Prüflings (1) implementiert ist.

## Claims

1. A test stand arrangement having a unit under test (1) that is connected to at least one electric motor (4) for driving and/or loading the unit under test (1) as well as having a control arrangement (6) for the or each electric motor (4) for driving and/or loading the test specimen (1), whereas at least a model (7) for a component that can be connected to the unit under test (1) is implemented in the control arrangement (6) and at least part of a control requirement for the or each electric motor (4) is determined from said model (7), **characterized in that** at least a model (7) for a multi-mass flywheel is implemented in the control arrangement (6), said model (7) contains at least two masses of the primary and secondary sides of the multi-mass flywheel and a substitute model for a bow spring in the multi-mass flywheel, whereas an algorithm being implemented in the control arrangement (6) that evaluates the model for a multi-mass flywheel by means of an integrated time step method.

2. The test stand arrangement according to claim 1, **characterized in that** the algorithm evaluates the model for a multi-mass flywheel by means of an integrated time step method having a fixed increment.

3. The test stand arrangement according to claim 1 or 2, **characterized in that** an algorithm has been implemented in the control arrangement (6) that evaluates elastic forces and friction of individual spring elements and the entire bow spring in each calculation step, whereas the resulting forces and torques arising from the mass inertia of the individual spring elements additionally being evaluated and determined as a resulting total force or resulting total torque on the primary and secondary side.

4. The test stand arrangement according to claim 2 or 3, **characterized in that** the model (7) for the multi-mass flywheel contains a parametric representation of a radial rigidity of the bow spring.

5. The test stand arrangement according to one of claims 1 to 4, **characterized in that** the model (7) for the multi-mass flywheel contains a parametric representation of the contact friction behavior.

6. The test stand arrangement according to one of claims 1 to 5, **characterized in that** the model (7) for the multi-mass flywheel contains a parametric representation of a variable free wheel.

7. The test stand arrangement according to one of claims 1 to 6, **characterized in that** the model (7) for the multi-mass flywheel contains a state shift between traction and sliding.

8. The test stand arrangement according to one of claims 1 to 7, **characterized in that** the model (7) for the multi-mass flywheel contains a model for a contact mechanics at the end stops of the bow spring at the primary and secondary mass.

9. The test stand arrangement according to one of claims 1 to 9, **characterized in that** at least a model (7) for a starter device of the unit under test (1) is implemented in the control arrangement (6).

## Revendications

1. Ensemble formant banc d'essai comportant une pièce en essai (1), laquelle est reliée à au moins une machine électrique (4) servant à l'entraînement et/ou la sollicitation de la pièce en essai (1), ainsi qu'un dispositif de régulation (6) destiné à la ou chaque machine électrique (4) servant à l'entraînement et/ou la sollicitation de la pièce en essai (1),
au moins un modèle (7) concernant un composant, qui peut être raccordé à la pièce en essai (1), étant mis en oeuvre dans le dispositif de régulation (6), modèle (7) sur la base duquel on détermine au moins une partie de la commande de régulation demandée à la ou chaque machine électrique (4), **caractérisé en ce qu**'au moins un modèle (7) de volant d'inertie à plusieurs masses est mis en oeuvre dans le dispositif de régulation (6), lequel modèle (7) comprend au moins deux masses, du côté primaire et du côté secondaire, du volant d'inertie à plusieurs masses et un modèle de remplacement concernant au moins un ressort en arc, un algorithme, qui évalue le modèle de volant d'inertie à plusieurs masses à l'aide d'un procédé intégratif à pas de temps, étant mis en oeuvre dans le dispositif de régulation (6).

2. Ensemble formant banc d'essai selon la revendication 1, **caractérisé en ce que** l'algorithme évalue le modèle de volant d'inertie à plusieurs masses multiple à l'aide d'un procédé intégratif à pas de temps ayant un pas de temps fixe.

3. Ensemble formant banc d'essai selon la revendication 1 ou 2, **caractérisé en ce qu***'*un algorithme, qui évalue à chaque étape de calcul la force et le frottement des différents éléments de ressort et de l'ensemble du ressort en arc, est mis en oeuvre dans le dispositif de régulation (6), les forces résultantes et les moments étant en plus évalués à partir de l'inertie des masses des différents éléments de ressort et calculés comme la somme des forces résultantes ou la somme des moments résultants du côté primaire et du côté secondaire.

4. Ensemble formant banc d'essai selon la revendication 2 ou 3, **caractérisé en ce que** le modèle (7) de volant d'inertie à plusieurs masses multiples comprend une représentation paramétrique de la rigidité radiale du ressort en arc.

5. Ensemble formant banc d'essai selon l'une quelconque des revendications 1 à 4, **caractérisé en ce que** le modèle (7) de volant d'inertie à plusieurs masses comprend une représentation paramétrique du comportement de frottement par contact.

6. Ensemble formant banc d'essai selon l'une quelconque des revendications 1 à 5, **caractérisé en ce que** le modèle (7) de volant d'inertie à plusieurs masses comprend une représentation paramétrique d'une roue libre variable.

7. Ensemble formant banc d'essai selon l'une quelconque des revendications 1 à 6, **caractérisé en ce que** le modèle (7) de volant d'inertie à plusieurs masses comprend un changement d'état entre adhérence et glissement.

8. Ensemble formant banc d'essai selon l'une quelconque des revendications 1 à 7, **caractérisé en ce que** le modèle (7) de volant d'inertie à plusieurs masses comprend un modèle de mécanique de contact au niveau de butées de fin de course du ressort en arc sur la masse primaire et la masse secondaire.

9. Ensemble formant banc d'essai selon l'une quelconque des revendications 1 à 8, **caractérisé en ce qu**'au moins un modèle (7) de dispositif de démarrage de la pièce en essai (1) est mis en ouvre dans le dispositif de régulation (6).
